# EUROPÄISCHE PATENTANMELDUNG

(11) **EP 2 224 050 A1**
(43) Veröffentlichungstag der Anmeldung: **01.09.2010**
(21) Anmeldenummer: 10153738.9
(22) Anmeldetag: 16.02.2010
(51) Int. Cl.: D06F 39/00

(54) **Vorrichtung zum Speichern von Wärme und entsprechendes Verfahren**

(30) Priorität: 26.02.2009 DE 102009001193
(71) Anmelder: BSH Bosch und Siemens Hausgeräte GmbH, 81739 München (DE)
(72) Erfinder: Albayrak, Hasan Gökcer, 13469 Berlin (DE); Eglmeier, Hans, 10587 Berlin (DE); Hanau, Andreas, 12359 Berlin (DE); Ludenia, Thomas, 14612 Falkensee (DE)

(57) **Zusammenfassung**

Eine in einem Hausgerät zur Pflege von Wäschestücken im Generatorbetrieb des Elektromotors rückgewonnene Energie soll zu einem beliebigen Zeitpunkt nutzbar sein. Zu diesem Zweck wird eine Vorrichtung zum Speichern von Wärme in einem Hausgerät (1) zur Pflege von Wäschestücken geschaffen. Sie umfasst einen Elektromotor (6), dessen Stator wenigstens eine Wicklung (11) aufweist. Die Vorrichtung umfasst ferner eine Wäschetrommel (5), die mit einem Rotor des Elektromotors (6) mechanisch gekoppelt ist, einen Laugenbehälter (3), in welchem die Wäschetrommel (5) drehbar angeordnet ist, sowie einen von dem Laugenbehälter (3) separaten Wasserspeicher (7), von welchem Wasser in den Laugenbehälter (3) leitbar ist. Es ist ein Heizelement (10) vorgesehen, das mit der wenigstens einen Wicklung (11) des Stators elektrisch koppelbar ist, und das zum Aufheizen von im separaten Wasserspeicher (7) befindlichem Wasser ausgebildet ist, wobei zum Aufheizen des Heizelements (10) erforderliche Energie wenigstens teilweise vom Elektromotor (6) erzeugt ist. Zur Erfindung gehört auch ein entsprechendes Verfahren.

## Beschreibung

Die Erfindung bezieht sich auf eine Vorrichtung zum Speichern von Wärme in einem Hausgerät zur Pflege von Wäschestücken, insbesondere in einer Waschmaschine. Die Erfindung betrifft des Weiteren ein Hausgerät zur Pflege von Wäschestücken, welches eine solche Vorrichtung aufweist. Schließlich bezieht sich die Erfindung auf ein Verfahren zum Speichern von Wärme in einem Hausgerät zur Pflege von Wäschestücken.

In Hausgeräten zur Pflege von Wäschestücken, wie insbesondere in Waschmaschinen, kann die Energie beispielsweise als elektrische Energie, das heißt als elektrische Spannung, gespeichert werden. Zum Speichern der elektrischen Energie werden dabei Kondensatoren verwendet, die mit einer Wicklung des Elektromotors des Hausgeräts gekoppelt sind. Es wird dabei die Generatoreigenschaft des Elektromotors ausgenutzt. Wird der Elektromotor abgebremst, so wird eine elektrische Spannung in den Wicklungen des Elektromotors induziert, so dass elektrischer Strom durch die Wicklungen fließt. Dieser elektrische Strom kann zum Kondensator geleitet werden, und der Kondensator kann mit elektrischer Ladung aufgrund des Stromflusses aufgeladen werden. Diese im Kondensator gespeicherte elektrische Energie kann dann zu einem späteren Zeitpunkt, beispielsweise beim nächsten Beschleunigen des Elektromotors, zur Speisung des Elektromotors genutzt werden.

Anstatt die im Generatorbetrieb des Elektromotors induzierte elektrische Spannung zu speichern, kann diese Energie in Wärme umgewandelt werden. Dann muss der in den Wicklungen des Elektromotors induzierte elektrische Strom auf einen Ohmschen Widerstand geleitet werden. Eine solche Vorrichtung, bei welcher wahlweise das Speichern der elektrischen Energie sowie das Umwandeln der elektrischen Energie in Wärme möglich ist, ist aus der Druckschrift EP 1 512 785 A1 bekannt. Bei dieser Vorrichtung wird die im Generatorbetrieb vom Elektromotor rückgewonnene Energie im Kondensator gespeichert und kann dann zum Antreiben des Elektromotors genutzt werden. Die im Kondensator gespeicherte elektrische Spannung wird überwacht. Überschreitet die am Kondensator anliegende Spannung einen vorbestimmten Wert, so wird der im Generatorbetrieb fließende Strom an einen Widerstand geleitet und die elektrische Energie in Wärme umgewandelt.

Der im Generatorbetrieb des Elektromotors einer Waschmaschine erzeugte elektrische Strom kann auch direkt zur Versorgung eines elektrischen Verbrauchers mit elektrischer Energie genutzt werden. Eine solche Lösung ist beispielsweise der WO 99/10584 A1 zu entnehmen. Diese Druckschrift beschreibt eine Waschmaschine, die eine mittels eines Elektromotors angetriebene Trommel zur Aufnahme von Wäschestücken aufweist. Beim Abschalten oder Drehrichtungsumschalten des Elektromotors ist ein Bremswiderstand in den Stromkreis der Statorwicklung des Elektromotors geschaltet. Als Bremswiderstand kann hier ein Heizstab einer Heizeinrichtung vorgesehen sein, so dass die im Generatorbetrieb des Elektromotors rückgewonnene Energie unmittelbar zum Aufheizen von in einem Laugenbehälter befindlichem Wasser genutzt werden kann. An dieser bekannten Waschmaschine ist als nachteilig der Umstand anzusehen, dass das Wasser im Laugenbehälter nur dann durch die vom Elektromotor erzeugte Energie aufgeheizt werden kann, wenn der Elektromotor abgebremst wird, das heißt wenn der Elektromotor generatorisch betrieben wird. Die im Generatorbetrieb erzeugte Wärme kann somit nicht zu einem beliebigen Zeitpunkt, sondern nur beim Abbremsen des Motors genutzt werden.

Es ist Aufgabe der Erfindung, eine Vorrichtung sowie ein Verfahren zu schaffen, bei welcher und welchem die vom Elektromotor im Generatorbetrieb rückgewonnene Energie zu einem beliebigen Zeitpunkt als thermische Energie genutzt werden kann, wobei ein energieeffizientes Betreiben des Hausgeräts sichergestellt werden soll.

Diese Aufgabe wird erfindungsgemäß durch eine Vorrichtung, welche die Merkmale nach Patentanspruch 1 aufweist, durch ein Hausgerät mit den Merkmalen nach Patentanspruch 3 sowie durch ein Verfahren, welches die Merkmale nach Patentanspruch 5 aufweist, gelöst. Vorteilhafte Ausgestaltungen der Erfindung sind Gegenstand der abhängigen Ansprüche.

Eine erfindungsgemäße Vorrichtung ist zum Speichern von Wärme in einem Hausgerät zur Pflege von Wäschestücken, insbesondere in einer Waschmaschine, ausgebildet. Die Vorrichtung umfasst einen Elektromotor, dessen Stator wenigstens eine Wicklung aufweist. Die Vorrichtung umfasst außerdem eine Wäschetrommel, die mit einem Rotor des Elektromotors mechanisch - z.B. über einen Riemen, über ein Getriebe oder unmittelbar - gekoppelt ist. Die Wäschetrommel ist dabei in einem Laugenbehälter drehbar angeordnet. Die Vorrichtung umfasst ferner einen von dem Laugenbehälter separaten Wasserspeicher beziehungsweise Wärmespeicher, von welchem Wasser in den Laugenbehälter leitbar ist, das heißt welcher mit dem Laugenbehälter fluidisch koppelbar ist. Die Vorrichtung weist ein Heizelement beziehungsweise einen Heizwiderstand, welches beziehungsweise welcher mit der wenigstens einen Wicklung des Stators elektrisch koppelbar ist. Das Heizelement ist zum Aufheizen von im separaten Wasserspeicher befindlichem Wasser ausgebildet, wobei zum Aufheizen des Heizelements erforderliche Energie wenigstens teilweise von dem Elektromotor erzeugt ist.

Die Erfindung macht sich somit die Tatsache zunutze, dass die vom Elektromotor im Generatorbetrieb rückgewonnene Energie als Wärme in einem vom Laugenbehälter separaten Wasserspeicher (auch Flottenspeicher genannt), das heißt im Wasser, gespeichert werden kann. Die Erfindung geht nun den Weg, das im separaten Wasserspeicher befindliche Wasser mit der im Generatorbetrieb rückgewonnenen Energie aufzuheizen. Dazu wird ein Heizelement in die Wicklung des Stators geschaltet, über welches elektrischer Strom im Generatorbetrieb des Elektromotors fließt. Dieser elektrische Strom bewirkt dann ein Aufheizen des Heizelements und somit des im separaten Wasserspeicher befindlichen Wassers. In vorteilhafter Weise wird durch die erfindungsgemäße Vorrichtung erreicht, dass die vom Elektromotor im Generatorbetrieb rückgewonnene Energie zu einem beliebigen Zeitpunkt als thermische Energie genutzt werden kann. Es wird somit ein energieeffizientes Betreiben des Hausgeräts gewährleistet.

Über die Forderung der im Sinne der vorstehend definierten Erfindung für den Elektromotor notwendigen Merkmale hinaus ist die Auswahl des Elektromotors grundsätzlich keinerlei Einschränkung unterworfen.

Das Heizelement kann in Form eines Heizstabes bereitgestellt und in dem separaten Wasserspeicher angeordnet sein. Der Widerstandswert eines elektrischen Widerstandselementes hängt bekanntlich von seiner Länge ab. Es gilt somit, dass je länger das Heizelement ist, desto mehr Wärme bei einer vorgegebenen Stromstärke des über das Heizelement fließenden Stromes erzeugt werden kann. Ein Heizstab als schraubenförmig gewickeltes Heizelement sorgt somit durch seine Form für einen guten Wirkungsgrad beim Ausnutzen der im Generatorbetrieb rückgewonnenen Energie. Für einen optimalen Wirkungsgrad kann der Widerstand des Heizelementes im Wesentlichen gleich dem Widerstand der Wicklung festgelegt werden, um eine Leistungsanpassung zu erreichen und die im Heizelement freigesetzte Wärme zu maximieren. Dazu kann neben der Länge des Heizelements auch dessen Querschnittsfläche in geeigneter Größe festgelegt werden. Für diese im Sinne der Erfindung grundsätzlich bevorzugte Leistungsanpassung ist die Form des Heizelementes nicht von wesentlicher Bedeutung.

Es hat sich als besonders vorteilhaft herausgestellt, wenn der Elektromotor ein permanenterregter Synchronmotor ist, dessen Rotor wenigstens einen Permanentmagneten trägt. Dann weist der Stator - wenn er dreiphasig ausgeführt ist - drei Wicklungen auf, welche mit einem Wechselrichter beziehungsweise Inverter elektrisch gekoppelt sind. Wird der Synchronmotor abgebremst, so wird in den Wicklungen elektrische Spannung induziert. Der Synchronmotor muss dabei nicht unbedingt ausgelegt sein als Netzsynchronmotor zum Betrieb mit einem Wechselstrom mit einer Netzfrequenz, insbesondere 50 Hz oder 60 Hz. Insbesondere kann der Synchronmotor ausgelegt sein zum Betrieb mit einem zwei- oder vielphasigen Wechselstrom mit weitgehend beliebig ausgewählter Frequenz. Der Synchronmotor kann insbesondere ein Motor des Typs BLDC-Motor sein.

Zur Erfindung gehört auch ein Hausgerät zur Pflege von Wäschestücken, insbesondere eine Waschmaschine. Das erfindungsgemäße Hausgerät weist eine erfindungsgemäße Vorrichtung auf.

Bezüglich der Anordnung des separaten Wasserspeichers hat es sich als vorteilhaft erwiesen, wenn er unter dem Laugenbehälter angeordnet ist.

Bei einem erfindungsgemäßen Verfahren wird Wärme in einem Hausgerät zur Pflege von Wäschestücken gespeichert. Das Hausgerät weist eine in einem Laugenbehälter drehbar angeordnete Wäschetrommel auf, die mit einem Rotor eines Elektromotors mechanisch gekoppelt ist. Das Hausgerät weist ferner einen von dem Laugenbehälter separaten Wasserspeicher auf, der mit dem Laugenbehälter fluidisch koppelbar ist beziehungsweise von welchem Wasser in den Laugenbehälter leitbar ist. Bei dem Verfahren wir der separate Wasserspeicher mit Wasser aufgefüllt. Die Wäschetrommel wird mittels des Elektromotors beschleunigt. Die Wäschetrommel wird dann abgebremst, wobei elektrische Spannung in einer Wicklung eines Stators des Elektromotors beim Abbremsen der Wäschetrommel induziert wird. Die Wicklung des Stators wird mit einem Heizelement elektrisch gekoppelt, welches in dem separaten Wasserspeicher angeordnet ist. Somit wird das im Wasserspeicher befindliche Wasser aufgeheizt, wobei die zum Aufheizen des Heizelements erforderliche Energie wenigstens teilweise von dem Elektromotor erzeugt wird. Schließlich wird das im separaten Wasserspeicher befindliche aufgeheizte Wasser in den Laugenbehälter geleitet.

Durch das erfindungsgemäße Verfahren kann die im Generatorbetrieb rückgewonnene Energie zu einem beliebigen Zeitpunkt als Wärme genutzt werden. Das im separaten Wärmespeicher befindliche aufgeheizte Wasser kann beispielsweise zum Waschen der Wäschestücke genutzt werden, indem es in den Laugenbehälter geleitet wird. Dann wird weniger Energie zum Aufheizen des zum Waschen der Wäschestücke erforderlichen Wassers benötigt. Somit können mehrere Wattstunden gespart werden.

Die mit Bezug auf die erfindungsgemäße Vorrichtung vorgestellten bevorzugten Ausführungsformen und insbesondere deren Vorteile gelten entsprechend für das erfindungsgemäße Verfahren.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Erfindung wird nun anhand eines bevorzugten Ausführungsbeispiels sowie anhand der beigefügten Zeichnungen näher erläutert. Dabei zeigen:
- Fig. 1: in schematischer und leicht perspektivischer Darstellung eine Waschmaschine mit einer Vorrichtung nach einer Ausführungsform der Erfindung; und
- Fig. 2: ein Blockschaltbild der Vorrichtung nach der Ausführungsform der Erfindung.

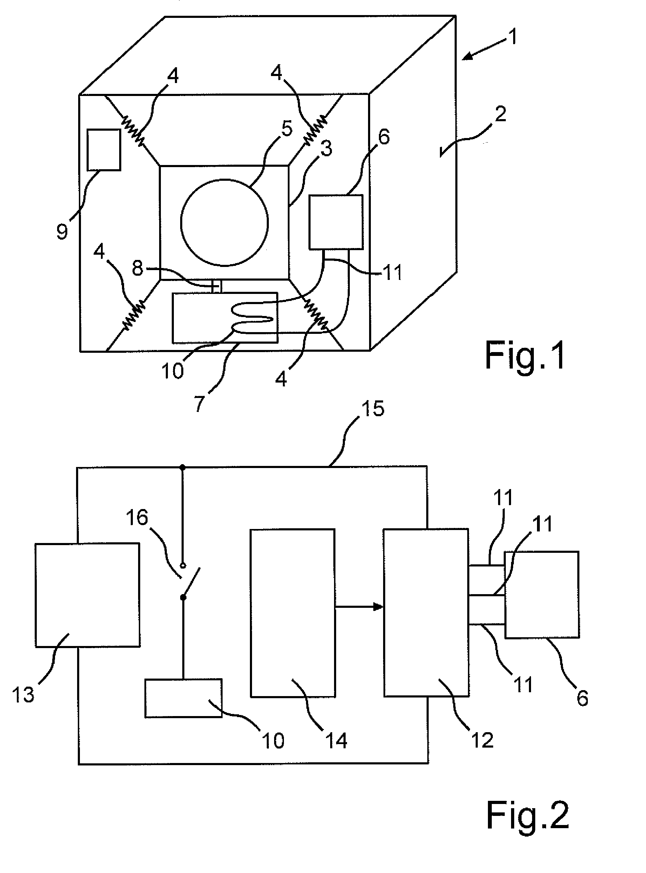

Fig. 1 zeigt in schematischer Darstellung eine Waschmaschine 1 mit einem Gehäuse 2. Im Gehäuse 2 befindet sich ein Laugenbehälter 3, welcher über Federelemente 4 mit dem Gehäuse 2 gekoppelt ist. Im Laugenbehälter 3 ist eine Wäschetrommel 5 zur Aufnahme von Wäschestücken drehbar angeordnet. Die Wäschetrommel 5 wird mittels eines permanenterregten Synchronmotors 6 angetrieben. Dabei kann die Trommel 5 entweder über einen Riemen, über ein Getriebe oder direkt mit dem Rotor des Synchronmotors 6 gekoppelt sein.

Die Waschmaschine 1 umfasst außerdem einen vom Laugenbehälter 3 separaten Wärmespeicher beziehungsweise Wasserspeicher 7. Dieser Wasserspeicher 7 ist hier in Form eines Wasserbehälters bereitgestellt. Er ist im Beispiel unter dem Laugenbehälter 3 angeordnet, beispielsweise auf einem Boden des Gehäuses 2. Der Wasserspeicher 7 ist über eine Koppeleinrichtung 8 mit dem Laugenbehälter 3 fluidisch koppelbar, das heißt ein im Wasserspeicher 7 befindliches Wasser kann über die Koppeleinrichtung 8 in den Laugenbehälter 3 geleitet werden. Die Koppeleinrichtung 8 kann beispielsweise ein Ventil und/oder eine Pumpe umfassen. Der Wasserspeicher 7 kann beispielsweise von einem externen Wasserversorgungsnetz mit Wasser aufgefüllt werden, das Wasser kann entweder über einen Waschmittelbehälter 9 oder direkt zum Wasserspeicher 7 geführt werden.

Ein in dem separaten Wasserspeicher 7 befindlicher Wasservorrat kann über die Raumtemperatur und Abwärme aus einem Waschprozess Wärme kumulieren und für einen folgenden Waschprozess oder weitere im selben Prozess folgende Verfahrensschritte zur Verfügung gestellt werden. Eine zusätzliche mögliche Energiequelle ist die kinetische Energie der Wäschetrommel 5 beziehungsweise des Rotors des Synchronmotors 6, dies insbesondere beim Schleudern. Es wird hier die Tatsache zunutze gemacht, dass der Synchronmotor 6 - wie alle Elektromotoren - sich umgekehrt als Generator betreiben lässt und erzeugt somit elektrische Energie. Um diese rückgewonnene elektrische Energie im Generatorbetrieb des Synchronmotors 6 zu nutzen, ist im Beispiel ein Heizelement 10 vorgesehen, welches im Wasserspeicher 7 angeordnet und mit einer Wicklung 11 des Stators des Synchronmotors 6 gekoppelt ist. Dabei kann das Heizelement 10 beispielsweise über einen elektrischen Schalter, wie zum Beispiel ein Relais oder einen Transistor, mit der Wicklung 11 koppelbar sein. Ein solcher elektrischer Schalter kann dann im Generatorbetrieb des Synchronmotors 6 geschlossen werden. Alternativ kann das Heizelement 10 direkt mit der Wicklung 11 gekoppelt sein.

Das Heizelement 10 ist in Form eines mäanderförmigen Heizstabes ausgebildet. Es wirkt als ohmscher Widerstand, wenn elektrischer Strom durch die Wicklung 11 und somit durch das Heizelement 10 fließt. Dann wird mittels des Heizelements 10 Wärme erzeugt, so dass das im Wasserspeicher 7 befindliche Wasser aufgeheizt werden kann. Somit kann dieses aufgeheizte Wasser zu einem späteren Zeitpunkt zum Waschen der in die Wäschetrommel 5 eingebrachten Wäschestücke verwendet werden.

In Fig. 2 ist ein Blockschaltbild der in Fig. 1 dargestellten Vorrichtung zum Speichern von Wärme in der Waschmaschine 1 gezeigt. Der Stator des Synchronmotors 6 ist dreiphasig ausgeführt, er weist somit insgesamt drei Wicklungen 11 auf. Die Wicklungen 11 sind mit einem Inverter 12 gekoppelt, mittels welchem Wechselspannung für die Wicklungen 11 des Synchronmotors 6 erzeugbar ist. Die Wechselspannung wird von einer gleichgerichteten Spannung erzeugt, welche wiederum von einem Netzteil 13 geliefert wird. Das Netzteil 13 kann beispielsweise einen Brückengleichrichter umfassen, welcher mit einem Spannungsversorgungsnetz gekoppelt ist. Der Inverter 12 wird mittels einer Steuereinheit 14 angesteuert. Wird die Wäschetrommel 5 abgebremst, beispielsweise nach einem Schleudergang, so wird in den Wicklungen 11 elektrische Spannung induziert. Durch die Wicklungen 11 fließt somit elektrischer Strom, welcher auch über den Inverter 12 und über eine Zwischenkreisleitung 15 fließt. Die Zwischenkreisleitung 15 ist über einen elektrischen Schalter 16 mit dem Heizelement 10 des separaten Wasserspeichers 7 koppelbar. Wird der Synchronmotor 6 generatorisch betrieben, so wird der Schalter 16 geschlossen, und der dabei induzierte Strom fließt zum Heizelement 10. Somit kann das im Wasserspeicher 7 befindliche Wasser aufgeheizt werden, ohne dass elektrische Energie von einem externen Versorgungsnetz notwenig ist. Auf diese Art und Weise kann das aufgeheizte Wasser für einen beliebigen späteren Waschgang genutzt werden. Es können somit mehrere Wattstunden pro Waschgang beziehungsweise Schleudergang gespart werden.

### Bezugszeichenliste

- 1: Waschmaschine
- 2: Gehäuse
- 3: Laugenbehälter
- 4: Federelemente
- 5: Wäschetrommel
- 6: Synchronmotor
- 7: separater Wasserspeicher
- 8: Koppeleinrichtung
- 9: Waschmittelbehälter
- 10: Heizelement
- 11: Wicklung
- 12: Inverter
- 13: Netzteil
- 14: Steuereinheit
- 15: Zwischenkreisleitung
- 16: Schalter

## Patentansprüche

1. Vorrichtung zum Speichern von Wärme in einem Hausgerät (1) zur Pflege von Wäschestücken, mit:
- einem Elektromotor (6), dessen Stator wenigstens eine Wicklung (11) aufweist,
- einer Wäschetrommel (5), die mit einem Rotor des Elektromotors (6) mechanisch gekoppelt ist,
- einem Laugenbehälter (3), in welchem die Wäschetrommel (5) drehbar angeordnet ist,
- einem von dem Laugenbehälter (3) separaten Wasserspeicher (7), von welchem Wasser in den Laugenbehälter (3) leitbar ist, und
- einem Heizelement (10), das mit der wenigstens einen Wicklung (11) des Stators elektrisch koppelbar ist, und das zum Aufheizen von im separaten Wasserspeicher (7) befindlichem Wasser ausgebildet ist, wobei zum Aufheizen des Heizelements (10) erforderliche Energie wenigstens teilweise von dem Elektromotor (6) erzeugt ist.

2. Vorrichtung nach Anspruch 1, wobei der Elektromotor (6) ein permanenterregter Synchronmotor ist und der Rotor wenigstens einen Permanentmagneten trägt.

3. Hausgerät (1) zur Pflege von Wäschestücken, mit einer Vorrichtung nach Anspruch 1 oder 2.

4. Hausgerät (1) nach Anspruch 3, wobei der separate Wasserspeicher (7) unter dem Laugenbehälter (3) angeordnet ist.

5. Verfahren zum Speichern von Wärme in einem Hausgerät (1) zur Pflege von Wäschestücken, wobei das Hausgerät (1) eine in einem Laugenbehälter (3) drehbar angeordnete Wäschetrommel (5) aufweist, die mit einem Rotor eines Elektromotors (6) mechanisch gekoppelt ist, und wobei das Hausgerät (1) einen von dem Laugenbehälter (3) separaten Wasserspeicher (7) aufweist, der mit dem Laugenbehälter (3) fluidisch koppelbar ist, mit den Schritten:
- Auffüllen des separaten Wasserspeichers (7) mit Wasser,
- Beschleunigen der Wäschetrommel (5) mittels des Elektromotors (6),
- Abbremsen der Wäschetrommel (5), wobei elektrische Spannung in einer Wicklung (11) eines Stators des Elektromotors (6) beim Abbremsen der Wäschetrommel (5) induziert wird,
- elektrisches Koppeln der Wicklung (11) des Stators mit einem Heizelement (10), welches in dem separaten Wasserspeicher (7) angeordnet ist, und somit Aufheizen des im Wasserspeicher (7) befindlichen Wassers, wobei zum Aufheizen des Heizelements (10) erforderliche Energie wenigstens teilweise von dem Elektromotor (6) erzeugt wird, und
- Leiten des aufgeheizten Wassers von dem separaten Wasserspeicher (7) in den Laugenbehälter (3).
